# EUROPEAN PATENT SPECIFICATION

(11) **EP 1 524 106 B1**
(45) Date of publication and mention of the grant of the patent: **31.01.2007**
(21) Application number: 03078237.9
(22) Date of filing: 14.10.2003
(51) Int. Cl.: B32B 27/00, C08J 5/24, B29C 70/44

(54) **Method of forming a composite structure**
Verfahren zur Herstellung einer Verbundstruktur
Procédé de fabrication d'une structure composite

(43) Date of publication of application: 20.04.2005
(73) Proprietor: SAAB AB, 581 88 Linköping (SE)
(72) Inventor: Krogager, Max, 582 75 Linköping (SE); Vaara, Jan, 582 75 Linköping (SE)
(74) Representative: Holmberg, Magnus

(56) References cited:
- WO-A-01/00405
- US-A- 4 562 033
- US-A- 6 017 484
- DATABASE WPI Section Ch, Week 199629 Derwent Publications Ltd., London, GB; Class A32, AN 1996-282071 XP002279627 & JP 08 118381 A (MITSUBISHI RAYON CO LTD) 14 May 1996 (1996-05-14)

## Description

The present invention relates to composites and, more specifically a method for forming composite structures.

### BACKGROUND OF THE INVENTION

Airplane manufacturers are under increasing pressure to produce lightweight, strong and durable aircraft at the lowest cost for manufacture and life cycle maintenance. An airplane must have sufficient structural strength to withstand stresses during flight, while being as light as possible to maximize the performance of the airplane. For these reasons and others, aircraft manufacturers have increasingly used fiber reinforced resin matrix composites.

Fiber-reinforced resin matrix composites provide good strength, fatigue resistance, stiffness and strength-to-weight ratio by incorporating strong, stiff, carbon fibers into a softer, more ductile resin matrix. The resin matrix material transmits forces to the fibers and provides ductility and toughness, while the fibers carry most of the applied force.

In prior art methods of producing fiber-reinforced resin matrix components for aircraft, a number of so called prepreg sheets are stacked on a mold. The prepreg consists of unidirectional fibers or multidimentsional fibers in uncured resin. A vacuum bag is placed over and sealed around the entire structure. Vacuum is applied to the sealed structure so as to compact the prepreg sheets onto the surface of the mold.

US-A-6 017 484 discloses a method for the manufacture of composities from a plurality of piles of resin prepregs comprising arranging a stack of prepreg sheets on a mold, enclosing said stack with a vacuum bag and evacuating said bag. This method of manufacture has however the drawback that that air is not completely evacuated, leaving pores of significant size in the composite.

In order to achieve aircraft quality in large composite parts, the structure must be placed in an autoclave which is pressurized so as to compact the prepreg sheets onto the mold. However, in large structures pores are easily produced at portions of the part as a result of air not being completely evacuated from the stack of prepreg sheets prior to the curing process. The pores causes drops in strength of the composite part. In order to remedy this problem prior methods include evacuating air from the stack of prepreg sheets on a number of occasions during lay-up of the sheets. Furthermore, prior methods require use of an autoclave in order to reach sufficient pressure during the curing process. With the autoclave process, air remaining between the sheets is distributed to pores of such size that their impact on the quality of the composite structure is considered to be acceptable. However, in order to guarantee that there are no pores of unacceptable sizes in the structure, the composite structure is examined by e.g. ultra-sound or other type of nondestructive testing before approval as part of an aircraft structure. If the testing reveals to large pores, the composite structure must be rejected.

Thus there exists a need for an improved method for making a large fiber-reinforced resin matrix composite part substantially free of pores.

### SUMMARY OF THE INVENTION

The present invention is a method for forming a composite structure. The method includes arranging a stack of prepreg sheets on a mold. The composite material is substantially sealed within a vacuum bag. One or more vacuum ports extend through the vacuum bag. Vacuum is applied through the vacuum ports for drawing air from the stack of prepreg sheets. Air in the space between each two prepreg sheets in the stack is evacuated through channels within at least one of the two adjacent prepreg sheets. The channels communicate with the vaccum port. The process is repeated until the stack comprises a predetermined number of prepreg sheets. The stack is released from the vacuum bag before adding sheets. The composite material is cured and the structure is released from the mold and the vacuum bag.

In a preferred embodiment of the invention the air-free channels within a prepreg sheet are filled with resin during curing.

In another embodiment of the invention each prepreg sheet in a stack is slightly rotated in relation to the preceeding sheet so that the direction of the fibers in two adjacent sheets do not coincide.

The method according to the invention provides a method where a composite structure is formed with a substantially reduced need for intermediate vacuuming when applying the sheets in a stack. Thus, the reduction in time and cost for producing each composite structure is considerable.

### BRIEF DESCRIPTION OF THE DRAWINGS

These aspects and many additional advantages of the present invention will become more readily appreciated and better understood by reference to the following detailed description, when taken in conjunction with the accompanying drawings.
- Fig. 1: is a cross-sectional view of a stack of prepreg sheets arranged in accordance with a first embodiment of the invention.
- Fig. 2: is a cross-sectional view of a stack of prepreg sheets arranged in accordance with a second embodiment of the invention

### DETAILED DESCRIPTION OF THE PREFERRED EMBODIMENT

The present invention will be described with reference to formation of a fiber-reinforced composite structure. The present invention is particularly beneficial for forming large composite structures irrespective of the configuration of the structures or their ultimate use.

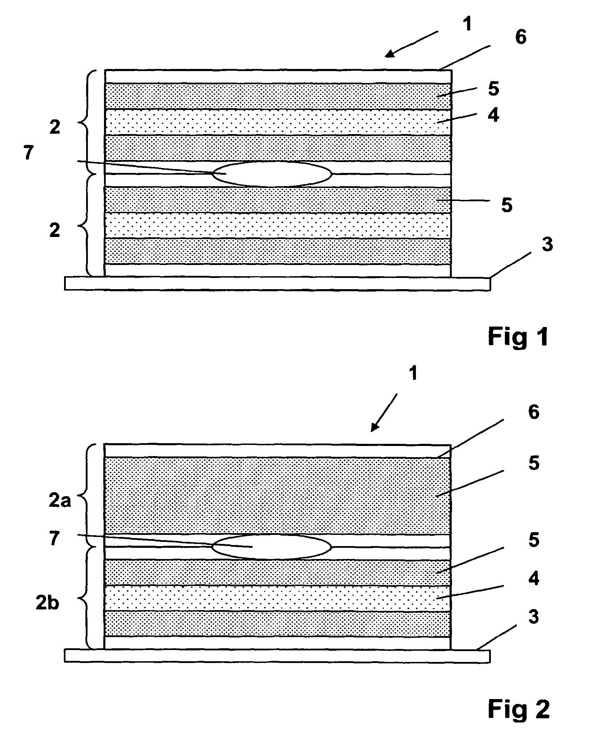

Figure 1 and 2 discloses a stack 1 of prepreg sheets 2 arranged on a lay-up mold 3 that has a forming surface. The upper face of the lay-up mold usually has a contour that substantially matches the outer surface of the part being formed.

The method of arranging prepreg sheets on a lay-up mold is well known. A stack of prepreg sheets 2 are placed on the mold 3. The prepreg sheets 2 preferably include carbon fiber tape impregnated with epoxy resin. A prepreg sheet 2 consists of layers of resin and fibres embedded in resin. In the embodiment disclosed in figure 1, each prepreg sheet includes a less impregnated layer 4 in a middle section of the prepreg sheet 2. The less impregnated layer is surrounded by layers 5 of fully impregnated resin, preferably with unidirectional fibers. The layer 4 of less impregnated fibres in the prepreg sheet 2 will function to provide a multitude of channels or airpaths for evacuating air during debulking and curing. It is preferred that unidirectional continuous fibers are embedded in the resin of each prepreg sheets. If a prepreg sheet is laid up with a multitude of fiber angles, it may be difficult for the air to pass through all layers because different fiber angles may lock the movements in the next layer. If the prepreg sheet only has one fiber angle, the air can more easily spread the fibers and the air may find a way out through the sheet. In order to increase the strength in the final composite structure, the sheets may be slightly rotated in relation to one another to increase the strength of the composite structure. Although a carbon fiber/epoxy composite is preferred, the invention can be used with other composite materials. The fibers can be e.g., fiberglass, silicon carbide, graphite or carbon. The present invention has particular relevance to making porosity-free composites because the method allows air in between the sheets to escape to a higher degree than was possible with previous methods.

Figure 2 discloses a second embodiment of the invention; where a stack of prepreg sheets are arranged so that every other prepreg sheet 2b include a less impregnated layer 4, a so called "dry" layer. The dry layer 4 is surrounded by fully impregnated layers 5. Pure resin 6 is applied in a very thin layer on each side of the prepreg sheet in order to improve the adhesion between two separate prepreg sheets 2a,2b. The prepreg sheet 2a adjacent to the sheet 2b including a dry layer 4, may be made up of a fully impregnated layer 5, surrounded on each side by very thin layers 6 of pure resin.

The layers of prepreg sheets 2 are placed onto the upper face of the lay-up mold 3 using hand lay-up procedures, automated tape laying procedures or other appropriate procedures. In a preferred embodiment of the invention, a metal plate is arranged on one side of a stack of prepreg sheets. The surface of the lay-up mold and the metal plate will create two good surfaces which are unaffected by external air paths. The prepreg sheets 2 are arranged so at least every other sheet includes a less impregnated layer 4, a layer of so called "dry fibers". Each less impregnated layer 4 constitutes an air path or channel that extends from the perimeter of the sheet to the inner part of the sheet or all the way through the sheet. A stack of prepreg sheets thus includes a number of air paths or channels extending into the stack 1 through the arrangement with layers of "dry fibers".

The stack 1 of prepreg sheets 2 is placed into a vacuum bag that includes at least one vacuum port. The vacuum port is connected to a vacuum hose and air is evacuated from the enclosed stack of prepreg sheets. Upon completion of the evacuation process, the completely relaxed vacuum bag is in direct contact with the surface of the lay-up over the entire surface. Using the less impregnated layers 4, air paths are formed within a predetermined number of prepreg sheets 2 in the stack 1. Due to these air paths, there is no need to apply external pressure outside the vacuum bag. Furthermore, it is possible to apply a much larger number of prepreg sheets 2 in a stack 1 without an intermediate evacuation process. The air trapped between the sheets is forced into the less impregnated layer 4 and may be evacuated from the stack by means of vacuum pressure during one evacuation process for a stack making up a composite structure. The presence of trapped air pockets or wrinkles between the sheets is avoided through the inventive method. Air 7 trapped between two adjacent prepreg sheets 2 may be evacuated through the less impregnated layer 4 during the evacuation process Subsequently, the whole assembly is placed in an oven. Curing occurs by heating the prepreg sheets 2 to a predetermined temperature in the oven. Curing may be performed in an autoclave or in another type of oven under atmospheric or superatmospheric pressure, as desired. The air paths or less impregnated layers 4 are filled with resin during curing. It is therefore possible to get a laminate quality to reach the demands for airplane structures with only vacuum.

Since the inventive method is faster than presently known methods, less time elapses between the stacking of the first and last prepreg layers of the lay-up. Cured composite articles produced according to the method display more complete and uniform bonding between the prepreg layers of the lay-up than articles produced according to known methods. Moreover, since the need for displacement of air pockets is eliminated there is much less disruption of the alignment of fibers in the prepreg layers of the lay-up.

The invention extends past the specific embodiments described to include those equivalent methods as will be apparent to those skilled in the art from the claims.

## Claims

1. A method of forming a composite structure 1 comprising the steps of:
a) arranging a stack (1) of prepreg sheets (2) on a mold (3),
b) enclosing said stack (1) within a vacuum bag,
c) evacuating the vacuum bag through a vacuum port, whereby upon completion of the evacuation said stack (1) of prepreg sheets (2) is essentially air-free,
d) repeating steps a)-c) until the stack (1) comprises a predetermined number of prepreg sheets (2), wherein the stack (1) is released from the vacuum bag before repeating steps a)-c),
e) curing the stack (1) of prepreg sheets (2) to form said composite structure
f) releasing the structure from the mold (3) and the vacuum bag,
**characterized in, that** the step of evacuating the vacuum bag includes evacuating air in the space between each two prepreg sheets (2) in the stack through at least one less impregnated layer (4) within at least one of the two prepreg sheets (2).

2. A method in accordance with claim 1, wherein the less impregnated layers (4) are filled with resin during curing.

3. A method in accordance with claim 1, wherein each prepreg sheet (2) in a stack (1) is slightly rotated in relation to the preceeding sheet so that the directions of the fibers in two adjacent sheets do not coincide.

## Patentansprüche

1. Verfahren zur Herstellung einer Verbundstruktur 1, das die Schritte umfaßt:
a) das Anordnen eines Stapels (1) von kunststoffimprägnierten Blättern (2) auf eine Form (3),
b) das Einschließen des Stapels (1) innerhalb eines Vakuumbeutels,
c) das Auspumpen des Vakuumbeutels über einen Vakuumanschluss, wobei der Stapel (1) der kunststoffimprägnierten Blätter (2) nach Abschluss des Auspumpens im Wesentlichen luftfrei ist,
d) das Wiederholen der Schritte a) - c), bis der Stapel eine vorbestimmte Anzahl an kunststoffimprägnierten Blättern (2) umfasst, worauf der Stapel (1) dem Vakuumbeutel entnommen wird, bevor die Schritte a) - c) wiederholt werden,
e) das Aushärten des Stapels (1) von kunststoffimprägnierten Blättern (2), um die Verbundstruktur zu bilden,
f) das Ablösen der Struktur von der Form (3) und Entnehmen aus dem Vakuumbeutel,
wobei das Verfahren **dadurch gekennzeichnet ist, dass**
der Schritt des Auspumpens des Vakuumbeutels umfasst: das Abpumpen von Luft im Raum zwischen jedem Paar von jeweils zwei kunststoffimprägnierten Blättern (2) im Stapel über mindestens eine weniger stark imprägnierte Schicht (4) innerhalb mindestens einem der zwei kunststoffimprägnierten Blätter (2).

2. Verfahren in Übereinstimmung mit Anspruch 1, wobei die weniger stark imprägnierten Schichten (4) während der Aushärtung mit Kunststoff gefüllt werden.

3. Verfahren in Übereinstimmung mit Anspruch 1, wobei jedes kunststoffimprägnierte Blatt (2) in einem Stapel (1) im Verhältnis zum vorherigen Blatt leicht gedreht wird, so dass die Richtungen der Fasern in zwei aufeinanderfolgenden Blättern nicht übereinstimmen.

## Revendications

1. Procédé de formation d'une structure composite 1 comprenant les étapes consistant à:
a) agencer un empilement (1) de feuilles pré imprégnées (2) sur un moule (3),
b) enfermer ledit empilement (1) à l'intérieur d'un sac sous vide,
c) évacuer le sac sous vide par un orifice d'aspiration, par lequel après l'achèvement de l'évacuation dudit empilement (1) de feuilles pré imprégnées (2) est sensiblement exempt d'air,
d) répéter les étapes a) à c) jusqu'à ce que l'empilement (1) comprenne un nombre prédéterminé de feuilles pré imprégnées (2), dans lequel l'empilement (1) est libéré du sac sous vide avant la répétition des étapes a) à c),
e) durcir l'empilement (1) de feuilles pré imprégnées (2) pour former ladite structure composite
f) libérer la structure du moule (3) et du sac sous vide,
**caractérisé en ce que**, l'étape d'évacuation du sac sous vide comprend l'évacuation de l'air dans l'espace entre chacune des deux feuilles pré imprégnées (2) dans l'empilement par au moins une couche moins imprégnée (4) dans au moins une des deux feuilles pré imprégnées (2).

2. Procédé selon la revendication 1, dans lequel les couches moins imprégnées (4) sont remplies avec de la résine pendant le durcissement.

3. Procédé selon la revendication 1, dans lequel chaque feuille pré imprégnées (2) dans un empilement (1) est légèrement tournée par rapport à la feuille précédente de sorte que les directions des fibres dans deux feuilles adjacentes ne coïncident pas.
